# EUROPEAN PATENT SPECIFICATION

(11) **EP 2 282 452 B1**
(45) Date of publication and mention of the grant of the patent: **04.04.2012**
(21) Application number: 09166937.4
(22) Date of filing: 31.07.2009
(51) Int. Cl.: H04L 12/42, H04B 10/02

(54) **Data transmission in a ring-type communication network**
Datenübertragung in einem Ringkommunikationsnetzwerk
Transmission de données dans un réseau de communication de type anneau

(43) Date of publication of application: 09.02.2011
(73) Proprietor: ABB Research Ltd., 8050 Zürich (CH)
(72) Inventor: Kirrmann, Hubert, CH-5404, Dättwil (CH); Tournier, Jean-Charles, 01200 Bellegarde sur Valserine (FR)
(74) Representative: ABB Patent Attorneys

(56) References cited:
- EP-A- 1 655 904
- US-A1- 2004 008 720
- US-A1- 2008 226 304

## Description

### FIELD OF THE INVENTION

The invention relates to the field of deterministic industrial communication systems using redundant communication networks for controlling mission-critical processes, in particular to vehicle control, drive control or substation automation.

### BACKGROUND OF THE INVENTION

In industrial communication systems for vital or otherwise mission-critical applications such as vehicle control, drive control or substation automation, availability and reliability are key issues, because a failing communication system may lead to an interruption of the application and to a shutdown of a process controlled by the latter. Therefore, communication network redundancy is an important feature of industrial communication systems demanding high availability, in particular those using Ethernet-based communication with commercial switches.

A high level of redundancy with seamless operation in case of failure may be provided by duplicating the communication lines, e.g. the electrical or optical transmission cable, as well as at least the physical layer of the corresponding protocol stack of the devices attached to each of the two local area networks through two independent transceivers and bus controllers. For each frame to be transmitted a sender simultaneously sends two frames, one over each line, and the receiver accepts whichever frame of such a pair of redundant frames comes first and discards the later frame. Switchover is seamless, since there is no need to repeat a frame in case of disruption of one path. The tagging of redundant frames offers a complete supervision of both redundant lines with normal traffic, ensuring a high coverage. This method has been described in patent application WO 2006/053459 and standardized as Parallel Redundancy Protocol (PRP) in IEC standard 62439. However, the PRP requires a complete and hence rather uneconomical duplication of the physical network.

A ring topology provides a more cost-effective solution, especially when the switching element is integrated within the node (forming a switching end node), offering a similar availability as PRP but often suffering from long recovery delays of up to a few ms. In a ring network, every node has two communication ports connecting to two neighbour nodes hence the ring network can be operated in either or both directions and thus offers resiliency against link failure. Ring networks such as FDDI or Token Ring are state-of-the art and can be of the Ethernet type, in which case protocols such as RSTP (IEEE 802.1D) ensure that frames cannot circulate indefinitely on the ring.

The unpublished patent application EP 08160883.8 relates to mission-critical or highly-available applications based on a ring-type communication network with a plurality of switching nodes and operating with full duplex links. A sender node that is connected over a respective first and second port to the communication network transmits pairs of redundant frames. For each frame to be sent on the ring network, a source and a duplicate frame are transmitted in opposite directions, both frames being relayed by the other nodes of the ring network until they eventually return back to the originating sender node. As a consequence, network load is roughly doubled with respect to a conventional ring network, but the destination node will receive the data after a maximum transmission delay that equals to the longest possible path of the ring. In the fault-free state, the destination node thus receives two redundant frames with the same contents. The redundant frames can be identified according to the Parallel Redundancy Protocol PRP above, hence only the earlier or first frame of the two frames is forwarded to the upper layer protocols and the later or second frame is discarded. In an advantageous variant of the invention, to prevent frames from circulating indefinitely in the ring, the originating sender node does not relay a frame that it had previously sent itself.

Substations in high and medium-voltage power networks include primary devices such as electrical cables, lines, bus bars, switches, power transformers and instrument transformers, which are generally arranged in switch yards and/or bays. These primary devices are operated in an automated way via a Substation Automation (SA) system. The SA system comprises microprocessor based, programmable secondary devices, so-called Intelligent Electronic Devices (IED) responsible for protection, control and/or monitoring of the primary devices. The IEDs are generally assigned to one of three hierarchical levels, i.e. the station level, the bay or feeder level, and the process level. The station level of the SA system includes an Operator Work Station (OWS) with a Human-Machine Interface (HMI) and a gateway to a Network Control Centre (NCC). IEDs on the bay level, also termed bay units, in turn are connected to each other and to the IEDs on the station level via an inter-bay or station bus. The station bus is covered by the part 8-1 of the IEC standard 61850 "communication networks and systems in substations" stipulating protocols (e.g. Manufacturing Message Specification MMS or Generic Object Oriented Substation Events GOOSE) that are not demanding in terms of network load (a few packets per seconds) and synchronization (1 ms is usually required), and aim at transmitting commands to the bay controllers, but also report events, such as alarm or status changes.

On the other hand, the process interface linking the process level to the bay level includes a process bus that is covered by the part IEC61850-9-2 of the above standard. The main task of the process bus is to transmit measurement values (Sampled Values SV) from the instrument transformers or merging units to the protection devices and trip commands (GOOSE) from the protection devices to the switchgear. Unlike the station bus, the process bus requires high availability (i.e. the sampled values sending rate is between 4 kHz and 12 kHz) and strict real-time constraints (i.e. the sampled values have to be delivered to the protection application less than 3 ms after they have been produced) in order to perform protection functions correctly.

While the availability requirement of the samples values data is clearly addressed by the above redundant protocol, the real-time requirement remains an open issue. The IEC 61850-9-2 protocol for Sampled Values is based on Ethernet and therefore can only provide a best effort guarantee concerning the delay for data delivery. Moreover, the protocol prioritizes the packets already circulating in the ring over the ones that need to be sent by a node. This property can lead to a mute node, i.e. a node constantly forwarding packets from one port to the other without being able to send its own packets.

Real time protocols have been extensively studied over the past 30 years, and two main approaches are found to guarantee real-time property to a communication protocol. According to these approaches, either the communication medium is reserved at a certain time and for a given delay (e.g. Time Triggered Controller Area Network TTCAN), or a packet is circulating periodically on the medium in which each node inserts or retrieves the data at a fixed position (e.g. EtherCAT). EtherCAT applies Ethernet to automation applications which require short data update times or cycle times, wherein the Ethernet packet, frame or telegram is no longer received, interpreted and copied as process data at every node. The EtherCAT slave devices read the data addressed to them, and insert input data, while the frame passes through the device. The frames are only delayed by a fraction of a microsecond in each node, and many nodes - typically the entire network - can be addressed with one frame.

US-20080226304 proposes an optical transmission apparatus for SDH/SONET optical signals, with a hardware unit obtaining failure information on a redundant line of working line and a protection line, and a CPU determining switching control of the redundant line based on the failure information, where the hardware unit switches the redundant line based on the switching control determined by the CPU.

### DESCRIPTION OF THE INVENTION

It is therefore an objective of the invention to enable real-time and/or deterministic data transmission in ring-type communication networks. This objective is achieved by a method of transmitting data in a ring-type communication network and a ring-type communication network according to claims 1 and 7, respectively. Further preferred embodiments are evident from the dependent patent claims.

According to the invention, Real-Time (RT) operational data is transmitted in a Highly available, Seamlessly Redundant (HSR) ring-type communication network with at least a master node, a source or publisher node, and a destination or subscriber node. Each one of the nodes comprises a first and second communication port connected to a respective first and second neighbouring node of the communication network, and is adapted to receive a frame via the first communication port, and to forward the received frame, either modified or unmodified, via the second communication port without additional delay. The master node sends, essentially simultaneously, a first and a second redundant frame or empty data packet to its first and second neighbouring node, respectively. Upon reception of a first one of the two redundant frames, the source node inserts process data into a predetermined and dedicated field. The source node subsequently adds the identical process data to a predetermined field of the second or later redundant frame. Once loaded or augmented with process data, both redundant frames are instantaneously and individually forwarded to the first and the second neighbouring node of the source node, respectively. The destination node finally extracts or copies the process data from the first arriving loaded redundant frame of the pair.

In a preferred variant of the invention, received loaded redundant frames are forwarded, once the relevant process data has been extracted, by the destination nodes. No elimination criterion is implemented in the destination nodes trying to establish whether or not another node in the ring might be interested in the process data carried by the received frame Only the master node will eliminate the redundant frames that it had previously launched itself, including in particular the loaded redundant frames based on the latter.

In an advantageous embodiment of the invention, the master node generates and transmits a sequence of pairs of redundant frames within one cycle. The number of pairs in the sequence depends on the actual number of nodes in the communication ring, which may thus exceed the number of nodes defined by the payload capacity of one single frame.

In a further advantageous embodiment of the invention, the operational process data comprises Sampled Measured Values (SMV) according to IEC 61850 9-2, provided to the source node by a current or voltage sensor connected to a high or medium voltage substation of an electric power system, or connected to a wind power, a hydro power or a Distributed Energy Resources (DER) system. The source node may additionally include GOOSE data in the same frame.

Another advantage of the proposed protocol resides in the fact that a dedicated synchronization protocol such as IEEE 1588 is no longer required to synchronize the different devices connected to the communication ring. If the master node is synchronized, by whatever means, with the rest of the substation, the master will, by means of the empty RT-HSR redundant frames cyclically sent at e.g. 4 kHz, inherently synchronize or syntonize the other devices on the ring.

In order to avoid a single point of failure, a further variant of the protocol described includes the provision of a backup or redundant master node in the ring. The latter is assumed to be synchronized with the primary master node, and to have an internal clock of the same kind and quality as the internal clock of the primary master node. However, instead of having an active redundant master which would double the network load, the backup master preferably operates in a standby redundancy mode and is adapted to actively detect the failure of the primary master. If the backup master node is located in the vicinity of the primary master, and preferably as an immediate neighbour, the backup master node will be able to determine a failure of the primary master node quasi instantaneously. In fact, in case no RT-HSR frame is received by the backup master node before the expiry of a maximum jitter or transmission delay of e.g. 5 µs, the backup master will conclude a primary master failure and in turn start sending redundant frames.

In summary, the present invention enables real-time or deterministic data transmission of Sampled Values by using a multiple tokens approach in the HSR protocol. At regular intervals a packet is provided on the ring into which each node will insert the data that needs to be sent. The proposed approach covers the data communication as such, i.e. how can the transport of data on HSR be made predictable, as well as the configuration part, i.e. at the initialization stage or after a network topology change. The proposed RT-HSR protocol provides both availability and real-time properties for the transport of sampled values on the process bus.

### BRIEF DESCRIPTION OF THE DRAWINGS

The subject matter of the invention will be explained in more detail in the following text with reference to preferred exemplary embodiments which are illustrated in the attached drawings, in which:
Fig.1 depicts an exemplary automation network with a ring topology,
Fig.2 illustrates the basic principle of the Real-Time (RT) enabled HSR protocol, and
Fig.3 illustrates the structure of an RT-HSR redundant frame.

The reference symbols used in the drawings, and their meanings, are listed in summary form in the list of reference symbols. In principle, identical parts are provided with the same reference symbols in the figures.

### DETAILED DESCRIPTION OF PREFERRED EMBODIMENTS

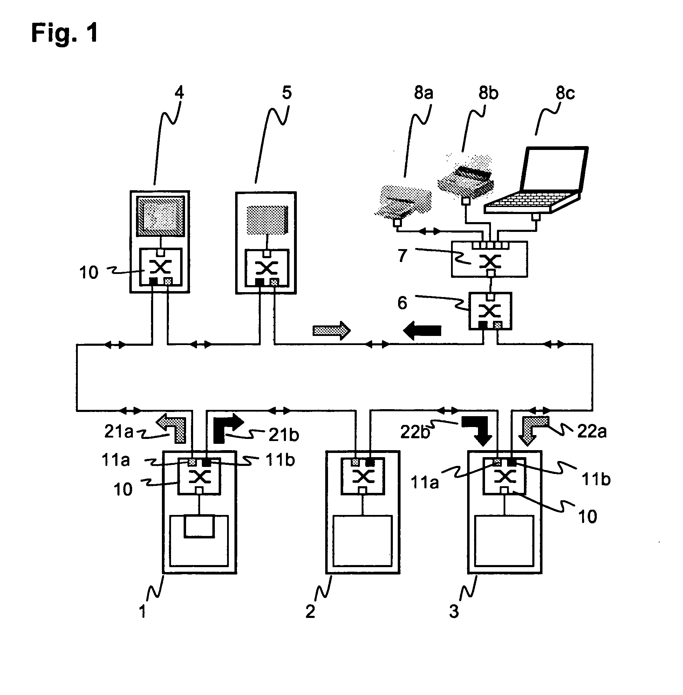

Fig.1 depicts an exemplary automation network with a ring topology, in which all switching nodes within the ring (1-6), such as protection, control and measuring devices (1-3), supervision workstation (4), clock master (5) as well as intermediary node (6) include a switch element (10) that is able to forward frames from one port (11a, 11b) to the other (11b, 11a), thus ensuring circulation of frames around the ring. The intermediary node (6) connects, via optional non-ring-node-switch (7), to a number of non-ring devices (8a-8c). In the notation of the present invention, the switch element of a master node (1) injects two redundant frames (21a, 21b), one in each direction (A, B) of circulation. The switch element (10) of a source node (3) or of a destination node (3) is capable of receiving frames (22a, 22b) from either direction of the ring and of forwarding them, either modified or as received, through the sending port (11a; 11b) opposed to the receiving port (11b; 11a), thus maintaining the original (anti-)clockwise direction of circulation of both redundant frames in the ring. This aspect is in accordance with the original High availability Seamless Redundancy (HSR) ring protocol as discussed in EP 08160883.8, where a node always sends a frame received from its higher layer protocols over both its ports, and the two duplicates of the frame circulate over the bus in opposite direction until they reach their original sender, and where receivers pass only the earlier frame of a pair to their higher layer protocols and discard the duplicate.

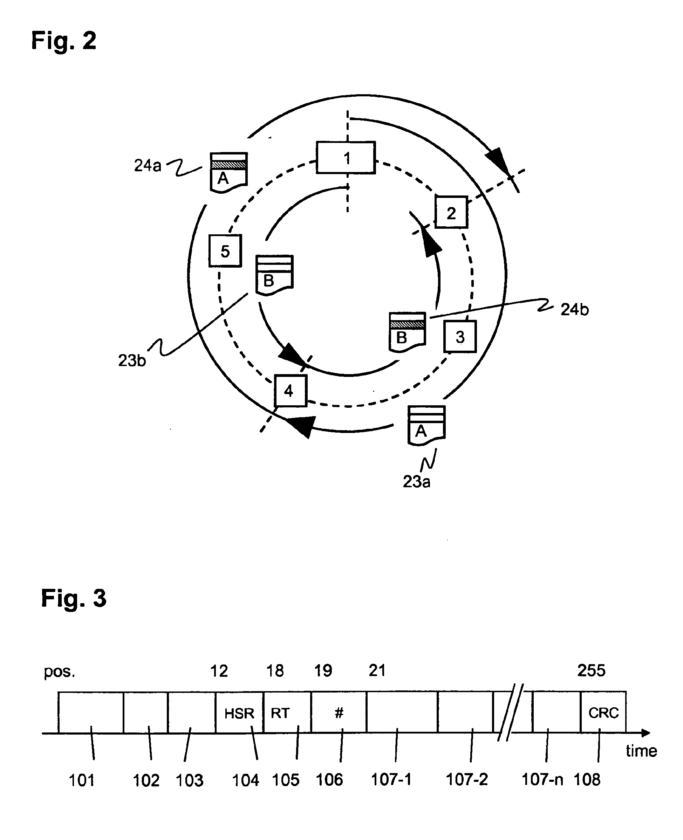

Fig.2 depicts the basic principle of the amended and Real-Time (RT) enabled HSR protocol according to the present invention in a ring (dashed line) with five nodes (1-5). Master node (1) generates and sends two redundant frames (23a, 23b) of a pair of redundant frames, wherein the frame designated "A" circulates clockwise and the frame designated "B" circulates counter clockwise. As further detailed below, the two redundant frames are originally identical except for some identifier equivalent to "A" or "B", and comprise predefined areas for process data to be provided and loaded by a source node. Both frames are forwarded by all nodes in the ring until they are occasionally removed. As soon as the first (23b) of the two redundant frames reaches a source node (4), the latter will insert relevant process data to be published, such as Sampled Values according to IEC 61850, to the frame, and will forward the loaded or augmented frame (24b) to the nearest neighbour node. The same applies to the second redundant frame (23a) reaching the source node at a later time. In fig.2, the two loaded redundant frames (24a, 24b) comprising the process data from the source node are marked with a grey stripe indicative of the added process data. Finally the destination node (2) reads and processes the data from the first (24b) of the two loaded redundant frames arriving at the destination node, and discards the data from the second or later frame (24a) in accordance with the principles developed for the Parallel Redundancy Protocol (IEC standard 62439). In order to enable the destination node to tell whether or not the payload field of the source node is empty, the payload field may comprise a specific header field, or the "empty" payload field may be pre-loaded with a meaningless bit sequence.

Packets are discarded or eliminated by the originator of the packet, i.e. the master node. Care has to be taken in order not to jeopardize redundancy by eliminating loaded frames that might still be first frames at a particular destination node. In other words, eliminating every frame after having circulated a single time in the ring might be premature, while waiting for the frame to complete a second round through the ring represents the safe side.

Fig.3 shows a RT-HSR redundant frame according to the invention. As in the original HSR protocol, the frame starts with a preamble (101), followed by the destination MAC address (102) that indicates the multicast character of the frame rather than identifying a single destination node, and followed by the source MAC address (103) that identifies the master node as the originator of the frame within the same subnet. The next field (104), at position 12 in the frame, is a HSR tag consisting of e.g. six bytes and including a specific value (0x88) indicative of the fact that the present frame obeys to the HSR protocol, a path, a size of the frame and a sequence number. The field 105, at position 18, indicates the real-time properties of the frame and actually points to the amendment to the original HSR protocol as introduced by the present invention. Field 106 is indicative of a sequence number or identifier that is required in case the master node sends a sequence of pairs of redundant frames. Finally, starting at position 21, the payload fields 107 assigned to the various nodes of the network follow. Each payload field (107-1 to 107-n) is reserved or pre-assigned to a specific source node (1 to n) and identified by a corresponding intraframe address or position. The frame is concluded by field 108 comprising a frame check sequence such as a Cyclic Redundancy Check CRC.

If the number of nodes in the ring exceeds the payload capacity of one single frame, a sequence of pairs of redundant frames is generated by the master node, with the pairs being identified by the sequence number or offset in field 106. This field has a predetermined length of 2 bytes, and thus allows for sequences of up to 65536 pairs. As a consequence, the pre-assigned area of a particular source node comprises both the sequence number and the memory location or position within the frame.

The number of messages required to allow each node to send process data is dependent on the number of nodes and the size of the data sent by each node. For the specific case of SMV data, the 9-2 light edition defines a protocol-specific frame of 150 bytes, which means that 10 different pre-assigned areas can be allocated per redundant frame having a standard Ethernet frame size of 1526 bytes. If an exemplary ring comprises 27 nodes, i.e. 27 merging units, the master launches 3 pairs of empty RT-HSR frames at the frequency required by the IEC 61850 9-2 protocol (i.e. 4 kHz or 12 kHz for Europe).

From a performance point of view, RT-HSR guarantees access to the network to each node without increasing the traffic load. When considering a 20 nodes ring example, and if 10 of the nodes are merging units providing SMV data (frames of 150 bytes at 4 kHz according to 9-2 light) and 10 are IEDs, the network load when using HSR is 10 x 4.5 Mbits/sec x 2 = 90 Mbits/sec, while is equal to 2 x 45 Mbits/sec = 90 Mbits/sec when using RT-HSR. From a real-time point of view, each node can communicate with each other in less than (N-2) x RD, with N being the number of nodes in the ring and RD being the residence delay of a frame in the node. With a ring of 20 nodes and a residence delay of 320 nanoseconds (assuming a 100 Mbits/sec network and cut-through forward technique implemented on each node after 32 bits), the maximum delay is 18 x 320 nanoseconds = 5.7 microseconds.

### LIST OF REFERENCE SYMBOLS

- 1-6: switching nodes
- 7: switch to non-ring nodes
- 8a, 8b, 8c: non-ring nodes
- 10: switch element
- 11a, 11b: communication ports
- 21 a-24a: frame circulating in direction A
- 21b-24b: frame circulating in direction B
- 101-108: fields of an RT-HSR frame

## Claims

1. A method of transmitting data in a ring-type communication network with a master node (1), a source node (4) and a destination node (2) connected to respective first (2; 5; 3) and second (5; 3; 1) neighbouring nodes of the communication network, the method comprising
- sending, by the master node (1), a first and a second redundant frame (23a, 23b) of a pair of redundant frames to the first (2) and the second (5) neighbouring node of the master node, respectively,
**characterized in that** the method comprises
- inserting, by the source node (4), identical process data into a predetermined field (107-4) of each of the two redundant frames (23a, 23b) of the pair of redundant frames and forwarding loaded redundant frames (24a, 24b) including said process data to the first (5) and the second (3) neighbouring node of the source node, respectively,
- extracting, by the destination node (2), the process data from a first loaded redundant frame (24b) received by the destination node.

2. The method according to claim 1, comprising
- forwarding, by the destination node (2), the two loaded redundant frames (24a, 24b) of the pair, and
- eliminating, by the master node (1), the two redundant frames (23a, 23b) and/or the two loaded redundant frames (24a, 24b) of the pair.

3. The method according to claim 1, comprising
- sending, by the master node (1), first and second redundant frames of a plurality of pairs of redundant frames to the first (2) and the second (5) neighbouring node of the master node, respectively, wherein two distinct redundant pairs include payload fields (107) for distinct source nodes.

4. The method according to one of the preceding claims, wherein the ring-type communication network is part of a Substation Automation SA system for a high or medium voltage substation of an electric power system, the method comprising
- inserting, by the source node, process data comprising Sampled Measured Values SMV data provided to the source node by a current or voltage sensor connected to the substation.

5. The method according to one of the preceding claims, wherein a node (2-5) on the ring is synchronized to the master node (1) based on the successive reception of a redundant frame (23a, 23b) of the pair of redundant frames.

6. The method according to one of the preceding claims, wherein the master node (1) is a primary master node, and wherein a backup master node is connected to the communication ring, the method comprising
- detecting, by the backup master node, a failure of the primary master node, and sending, by the backup master node, first and second redundant frames to the neighbouring nodes of the backup master node.

7. A ring-type communication network with a master node (1), a source node (4) and a destination node (2) connected to respective first (2; 5; 3) and second (5; 3; 1) neighbouring nodes of the communication network, respectively, wherein
- the master node (1) is adapted to generate and send a first and a second redundant frame (23a, 23b) of a pair of redundant frames to the first (2) and the second (5) neighbouring node of the master node, respectively,
**characterized in that**
- the source node (4) is adapted to insert identical process data into a predetermined field (107-4) of each of the two redundant frames (23a, 23b) of the pair of redundant frames, and to forward loaded redundant frames (24a, 24b) including said process data to the first (5) and the second (3) neighbouring node of the source node, respectively,
- the destination node (2) is adapted to extract the process data from a first loaded redundant frame (24b) received by the destination node.

8. The network according to claim 7, **characterized in that** the master node (1) is a primary master node and **in that** a backup master node is connected to the communication network and adapted to actively detect a failure of the primary master node.

## Patentansprüche

1. Verfahren zum Übertragen von Daten in einem Kommunikationsnetz des Ringtyps mit einem Master-Knoten (1), einem Quellenknoten (4) und einem Zielknoten (2), die mit jeweiligen ersten (2; 5; 3) und zweiten (5; 3; 1) benachbarten Knoten des Kommunikationsnetzes verbunden sind, wobei das Verfahren Folgendes umfasst:
- der Master-Knoten (1) sendet einen ersten und einen zweiten redundanten Rahmen (23a, 23b) eines Paars redundanter Rahmen zu dem ersten (2) bzw. dem zweiten (5) benachbarten Knoten des Master-Knotens,
**dadurch gekennzeichnet, dass** das Verfahren Folgendes umfasst:
- der Quellenknoten (4) fügt identische Prozessdaten in ein Vorbestimmtes Feld (107-4) jedes der zwei redundanten Rahmen (23a, 23b) des Paars redundanter Rahmen ein und beladene redundante Rahmen (24a, 24b), die die Prozessdaten umfassen, werden zu dem ersten (5) bzw. dem zweien (3) benachbarten Knoten des Quellenknotens weitergeleitet,
- der Zielknoten (2) extrahiert die Prozessdaten aus einem durch den Zielknoten empfangenen ersten beladenen redundanten Rahmen (24b).

2. Verfahren nach Anspruch 1, umfassend:
- der Zielknoten (2) leitet die zwei beladenen redundanten Rahmen (24a, 24b) des Paars weiter und
- der Master-Knoten (1) eliminiert die zwei redundanten Rahmen (23a, 23b) und/oder die zwei beladenen redundanten Rahmen (24a, 24b) des Paars.

3. Verfahren nach Anspruch 1, umfassend:
- der Master-Knoten (1) sendet erste und zweite redundante Rahmen mehrerer Paare redundanter Rahmen zu dem ersten (2) bzw. dem zweiten (5) benachbarten Knoten des Master-Knotens, wobei zwei distinkte redundante Paare Nutzinformationsfelder (107) für distinkte Quellenknoten umfassen.

4. Verfahren nach einem der vorhergehenden Ansprüche, wobei das Kommunikationsnetz des Ringtyps Teil eines Systems der Substation Automation SA für eine Hoch- oder Mittelspannungs-Schaltanlage eines elektrischen Stromversorgungssystems ist, wobei das Verfahren Folgendes umfasst:
- der Quellenknoten fügt Prozessdaten, die Daten der Sampled Measured Values SMV umfassen, ein, die dem Quellenknoten durch einen mit der Schaltanlage verbundenen Strom- oder Spannungssensor bereitgestellt werden.

5. Verfahren nach einem der vorhergehenden Ansprüche, wobei ein Knoten (2-5) in dem Ring auf der Basis des sukzessiven Empfangs eines redundanten Rahmens (23a, 23b) des Paars redundanter Rahmen mit dem Master-Knoten (1) synchronisiert wird.

6. Verfahren nach einem der vorhergehenden Ansprüche, wobei der Master-Knoten (1) ein primärer Master-Knoten ist und wobei ein Backup-Master-Knoten mit dem Kommunikationsring verbunden ist, wobei das Verfahren Folgendes umfasst:
- der Backup-Master-Knoten detektiert einen Ausfall des primären Master-Knotens und der Backup-Master-Knoten sendet erste und zweite redundante Rahmen zu den benachbarten Knoten des Backup-Master-Knotens.

7. Kommunikationsnetz des Ringtyps mit einem Master-Knoten (1), einem Quellenknoten (4) und einem Zielknoten (2), die mit jeweiligen ersten (2; 5; 3) bzw. zweiten (5; 3; 1) benachbarten Knoten des Kommunikationsnetzes verbunden sind, wobei
- der Master-Knoten (1) dafür ausgelegt ist, einen ersten und einen zweiten redundanten Rahmen (23a, 23b) eines Paars redundanter Rahmen zu erzeugen und zu dem ersten (2) bzw. dem zweiten (5) benachbarten Knoten des Master-Knotens zu senden,
**dadurch gekennzeichnet, dass**
- der Quellenknoten (4) dafür ausgelegt ist, identische Prozessdaten in ein Vorbestimmtes Feld (107-4) jedes der zwei redundanten Rahmen (23a, 23b) des Paars redundanter Rahmen einzufügen und beladene redundante Rahmen (24a, 24b), die die Prozessdaten umfassen, zu dem ersten (5) bzw. dem zweiten (3) benachbarten Knoten des Quellenknotens weiterzuleiten,
- der Zielknoten (2) dafür ausgelegt ist, die Prozessdaten aus einem durch den Zielknoten empfangenen ersten beladenen redundanten Rahmen (24b) zu extrahieren.

8. Netz nach Anspruch 7, **dadurch gekennzeichnet, dass** der Master-Knoten (1) ein primärer Master-Knoten ist und dass ein Backup-Master-Knoten mit dem Kommunikationsnetz verbunden ist und dafür ausgelegt ist, aktiv einen Ausfall des primären Master-Knotens zu detektieren.

## Revendications

1. Procédé de transmission de données dans un réseau de communications en anneau comportant un noeud maître (1), un noeud source (4) et un noeud destinataire (2) connectés à des premiers (2 ; 5 ; 3) et seconds (5 ; 3 ; 1) noeuds voisins respectifs du réseau de communications, le procédé comprenant :
- l'envoi, par le noeud maître (1), d'une première et d'une seconde trame redondante (23a, 23b) d'une paire de trames redondantes aux premier (2) et second (5) noeuds voisins du noeud principal, respectivement, **caractérisé en ce que** le procédé comprend :
- l'insertion, par le noeud source (4), de données de traitement identiques dans un champ prédéterminé (107-4) de chacune des deux trames redondantes (23a, 23b) de la paire de trames redondantes et la transmission de trames redondantes chargées (24a, 24b) comportant lesdites données de traitement aux premier (5) et second (3) noeuds voisins du noeud source, respectivement,
- l'extraction, par le noeud destinataire (2), des données de traitement d'une première trame redondante chargée (24b) reçue par le noeud destinataire.

2. Procédé selon la revendication 1, comprenant
- la transmission, par le noeud destinataire (2), des deux trames redondantes chargées (24a, 24b) de la paire, et
- l'élimination, par le noeud maître (1), des deux trames redondantes (23a, 23b) et/ou des deux trames redondantes chargées (24a, 24b) de la paire.

3. Procédé selon la revendication 1, comprenant
- l'envoi, par le noeud maître (1), de première et seconde trames redondantes d'une pluralité de paires de trames redondantes aux premier (2) et second (5) noeuds voisins du noeud maître, respectivement, deux paires redondantes distinctes comportant des champs de charge utile (107) de noeuds sources distincts.

4. Procédé selon l'une quelconque des revendications précédentes, dans lequel le réseau de communications en anneau fait partie d'un système d'Automatisme de Poste Electrique, SA, pour un poste haute ou moyenne tension d'un réseau électrique, le procédé comprenant :
- l'insertion, par le noeud source, de données de traitement comprenant des données de Valeurs Mesurées Echantillonnées, SMV, fournies au noeud source par un capteur de courant ou de tension connecté au poste.

5. Procédé selon l'une quelconque des revendications précédentes, dans lequel un noeud (2-5) sur l'anneau est synchronisé sur le noeud maître (1) en fonction de la réception successive d'une trame redondante (23a, 23b) de la paire de trames redondantes.

6. Procédé selon l'une quelconque des revendications précédentes, dans lequel le noeud maître (1) est un noeud maître principal, et dans lequel un noeud maître de secours est connecté à l'anneau de communication, le procédé comprenant :
- la détection, par le noeud maître de secours, d'une défaillance du noeud maître principal, et l'envoi, par le noeud maître de secours, de première et seconde trames redondantes aux noeuds voisins du noeud maître de secours.

7. Réseau de communications en anneau comportant un noeud maître (1), un noeud source (4) et un noeud destinataire (2) connectés respectivement à des premiers (2 ; 5 ; 3) et seconds (5 ; 3 ; 1) noeuds voisins respectifs du réseau de communications, dans lequel :
- le noeud maître (1) est adapté pour générer et envoyer une première et une seconde trame redondante (23a, 23b) d'une paire de trames redondantes aux premier (2) et second (5) noeuds voisins du noeud maître, respectivement,
**caractérisé en ce que** :
- le noeud source (4) est adapté pour insérer des données de traitement identiques dans un champ prédéterminé (107-4) de chacune des deux trames redondantes (23a, 23b) de la paire de trames redondantes, et transmettre des trames redondantes chargées (24a, 24b) comportant lesdites données de traitement aux premier (5) et second (3) noeuds voisins du noeud source, respectivement,
- le noeud destinataire (2) est adapté pour extraire les données de traitement d'une première trame redondante chargée (24b) reçue par le noeud destinataire.

8. Réseau selon la revendication 7, **caractérisé en ce que** le noeud maître (1) est un noeud maître principal et **en ce qu'**un noeud maître de secours est connecté au réseau de communications et adapté pour détecter activement une défaillance du noeud maître principal.
